Europäisches Patentamt

European Patent Office

Office européen des brevets

(19)

(11) Numéro de publication: **0 032 643**
**B1**

(12) **FASCICULE DE BREVET EUROPEEN**

(45) Date de publication du fascicule du brevet:
02.02.83

(21) Numéro de dépôt: **80401663.2**

(22) Date de dépôt: **20.11.80**

(51) Int. Cl.³: **F 16 B 43/00, B 60 B 3/16**

(54) **Dispositif de fixation, notamment pour roue de véhicule.**

(30) Priorité: **18.01.80 FR 8001040**

(43) Date de publication de la demande:
**29.07.81 Bulletin 81/30**

(45) Mention de la délivrance du brevet:
**02.02.83 Bulletin 83/5**

(84) Etats contractants désignés:
**BE DE GB IT**

(56) Documents cités:

**FR-A-1 452 053**
**FR-A-2 210 515**

(73) Titulaire: **AUTOMOBILES PEUGEOT, 75, avenue de la Grande Armée, F-75116 Paris (FR)**
Titulaire: **SOCIETE ANONYME AUTOMOBILES CITROEN, 117 à 167, Quai André Citroen, F-75747 Paris Cedex 15 (FR)**

(72) Inventeur: **Ferrand, Michel, 23, rue des Sources, F-25200 Montbéliard (FR)**

(74) Mandataire: **Moncheny, Michel et al, c/o Cabinet Lavoix 2 Place d'Estienne d'Orves, F-75441 Paris Cedex 09 (FR)**

ACTORUM AG

Dispositif de fixation, notamment pour roue de véhicule

La présente invention se rapporte à un dispositif destiné à assurer une fixation démontable d'une pièce mécanique, notamment d'une roue de véhicule outomobile, sur un support.

Les roues de véhicules automobiles sont fixées sur un moyeu soit par des vis, soit par des écrous vissés sur des goujons solidaires du moyeu.

Lorsque la roue est réalisée en tôle d'acier, son épaisseur est relativement faible et lon utilise la déformation élastique du métal pour assurer une fixation sûre, indesserrable accidentellement. Dans ce cas il est courant de prévoir une surface de portée sphérique entre l'organe de fixation et la roue.

Par contre, lorsque la roue est réalisée en alliage léger, il est nécessaire de prévoir un moyen de serrage différent, si l'on veut éviter la détérioration de la roue par l'organe de fixation. Une solution connue consiste à prévoir, sur l'organe de fixation, entre une tête et la roue, une bague libre en rotation, des surfaces de portée conique de conicités différentes étant prévues entre la tête et la bague, d'une part, et entre la bague et la roue, d'autre part (cf. FR-A-2 210 515).

Or, on peut être amené à monter, sur un même moyeu, soit une roue en acier, soit une roue en alliage léger, par exemple à la suite d'un changement de roue nécessité par une crevaison. Dans ce cas il est indispensable d'utiliser un jeu d'organes de fixation approprié à la nature du matériau constituant la roue, faute de quoi on encourt des risques particulièrement graves.

La présente invention a pour but de remédier à cet inconvénient en fournissant un dispositif de fixation utilisable indifféremment pour une roue en acier ou pour une roue en alliage léger.

Ce despositif comprend un organe de fixation proprement dit ayant une tête prolongée par un corps autour duquel une bague est montée libre en rotation, cette bague comportant deux portées tronconiques de conicités et de surfaces différentes, dont la première, intérieure, coopère avec une surface de portée conjuguée délimitée, sur ladite tête, tandis que la deuxième, extérieure, est destinée à venir en contact avec une première pièce à fixer.

Il est caractérisé en ce que la bague comporte une troisième surface extérieure de portée, sphérique, décalée axialement par rapport à la deuxième portée extérieure conique et destinée à coopérer avec un autre pièce à fixer, de caractéristiques différentes de la première.

De préférence, la surface de portée sphérique est contenue à l'intérieur du cône formé par la deuxième surface de portée extérieure conique.

Un exemple de réalisation de l'invention fait l'objet de la description qui suit, en référence aux dessins joints dans lesquels:

la fig. 1 représente un écrou de fixation en vue extérieure et en coupe partielle axiale;

la fig. 2 est une vue analogue de la bague associée à l'écrou;

la fig. 3 est une vue en coupe, à plus grande échelle, montrant le montage de la bague sur l'écrou;

la fig. 4 est une vue montrant l'utilisation de l'organe de fixation pour une roue en acier;

la fig. 5 est une vue montrant l'utilisation de l'organe de fixation pour une roue en alliage léger.

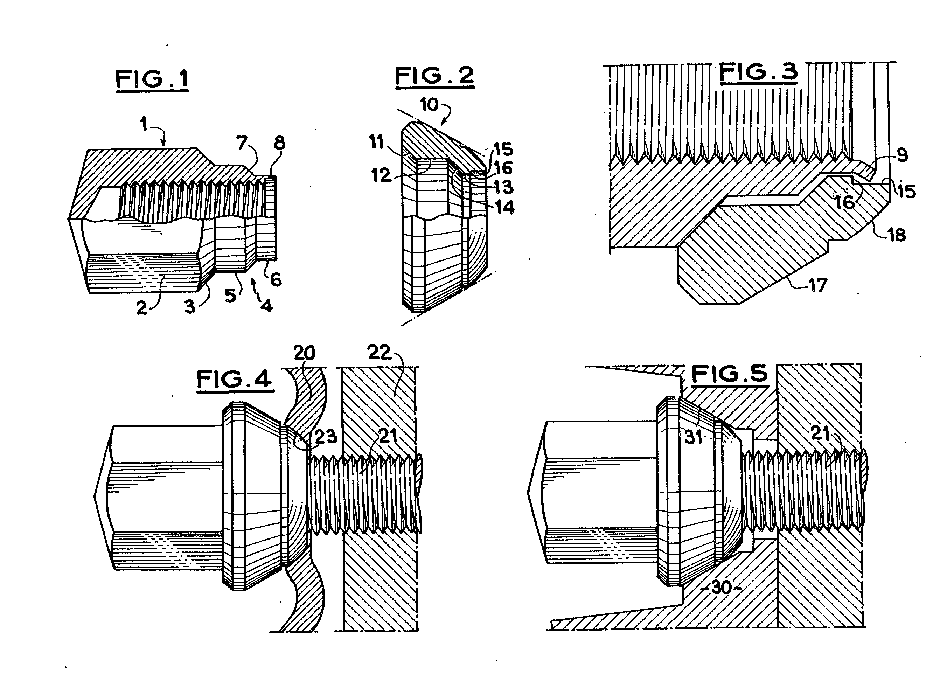

L'écrou 1 représenté à la fig. 1 est borgne, il comprend une tête 2 reliée par une surface 3 de portée conique à un corps 4 formant deux parties 5, 6 cylindriques, étagées et reliées par une partie 7 tronconique. A son extrémité libre, le corps délimite une jupe 8 cylindrique.

Autour du corps 4 est montée une bague 10 libre en rotation mais maintenue axialement, par exemple par un épanouissement 9 de la jupe 8 cylindrique (fig. 3). Cet épanouissement 9 pourrait être remplacé par des pattes remplissant la même fonction ou par tout autre moyen convenable.

Intérieurement, la bague 10 présente successivement une surface 11 de portée conique destinée à coopérer avec la surface 3 de portée conique, deux parties 12, 13 cylindriques reliées par une partie 14 tronconique et un logement 15 cylindrique, de diamètre supérieur à la surface 13 adjacente et reliée à cette dernière par un épaulement 16 radial (fig. 2). Les surfaces 12, 13 et 14 présentent un léger jeu par rapport aux parties 5, 6 et 7 correspondantes du corps 4 de façon à ne pas gêner l'autocentrage de la surface 11 sur sa surface conjuguée 3 (fig. 3).

Extérieurement, la bague 10 présente deux surfaces 17, 18 de portée, décalées axialement (fig. 3). La surface 17 de portée conique présente une conicité plus faible et une surface plus grande que la surface 11 de portée conique intérieure. La surface 18 de portée sphérique est de préférence contenue à l'intérieur du cône formé par la surface 17 de portée conique, ce qui est rendu possible du fait de l'étagement des parties 12, 13 cylindriques intérieures.

La fig. 4 montre l'utilisation du dispositif de fixation ainsi décrit avec une roue en tôle d'acier 20. L'écrou est alors vissé sur un goujon 21, solidaire d'un moyeu 22, le centrage et le serrage de la roue 20 étant assurés par la portée de la surface 18 sphérique de la bague 10 sur une surface 23 conjuguée de la roue. La forme sphérique maintient un bon contact entre les surfaces, malgré la déformation élastique de la roue 20.

La fig. 5 montre l'utilisation de ce même dispositif de fixation avec une roue en alliage léger 30. L'écrou est encore fixé sur le même goujon 21 mais le centrage et le serrage de la roue 30 sont assurés par la portée de la surface 17 conique de la bague 10 sur une surface 31 conjuguée de la roue. Les différences de conicité et de surface entre les surfaces 17, 31 d'une part et 3, 11 d'autre part, font qu'au cours du serrage et du desserrage, la bague 10 reste immobile par rapport à la roue 20, évitant ainsi sa détérioriation. Par ailleurs, la surface 18 de portée sphérique, contenue à l'intérieur du cône prolongeant la surface 17, n'interfère pas avec la surface 31 et ne gêne donc aucunement la mise en place et l'action de l'organe de fixation.

Dans l'exemple décrit la fixation de la roue est assurée par le vissage d'un écrou sur un goujon solidaire du moyeu. Les mêmes dispositions pourraient être appliquées si la roue était fixée à l'aide d'une vis coopérant avec un alésage taraudé de ce moyeu.

**Revendications**

1. Dispositif de fixation d'une pièce sur un support, comprenant un organe (1) de fixation proprement dit ayant une tête (2) prolongée par un corps (4) autour duquel une bague (10) est montée libre en rotation, cette bague (10) comportant deux surfaces (11, 17) de portée tronconique, de conicités et du surfaces différentes, dont la première (11), intérieure, coopère avec une surface (3) de portée conjuguée délimitée sur ladite tête (2), tandis que la deuxième (17), extérieure, est destinée à venir en contact avec une première pièce (30) à fixer, caractérisé en ce que la bague (10) comporte une troisième surface (18) extérieure de portée sphérique, décalée axialement par rapport à la deuxième surface (17) de portée extérieure et destinée à coopérer avec une autre pièce (20) à fixer de caractéristiques différentes de la première (30).

2. Dispositif de fixation suivant la revendication 1, caractérisé en ce que la troisième surface (18) de portée sphérique est contenue à l'intérieur du cône formé par la deuxième surface (17) extérieure de portée conique.

3. Dispositif de fixation suivant la revendication 1, caractérisé en ce que le corps (4) de l'organe (1) de fixation a une surface externe étagée.

4. Dispositif de fixation suivant la revendication 3, caractérisé en ce que le corps (4) de l'organe (1) de fixation comporte, extérieurement, deux parties (5, 6) cylindriques raccordées par une partie (7) tronconique.

5. Dispositif de fixation suivant l'une quelconque des revendications 3 et 4, caractérisé en ce que la bague (10) est étagée intérieurement.

6. Dispositif de fixation suivant la revendication 5, caractérisé en ce que ladite bague (10) comporte, intérieurement, deux parties (12, 13) cylindriques raccordées par une partie (14) tronconique.

7. Dispositif de fixation suivant l'une quelconque des revendications 3 à 6, caractérisé en ce qu'il est prévu un jeu radial entre les surfaces adjacentes de la bague (10) et du corps (4) de l'organe (1) de fixation.

8. Dispositif de fixation suivant la revendication 1, caractérisé en ce que le corps (4) de l'organe (1) de fixation se termine à son extrémité libre par une jupe (8) qui après déformation radiale vers l'extérieur (en 9), est reçue dans un logement (15) de la bague (10) et assure la retenue axiale de la bague (10) par rapport à l'organe (1) de fixation.

9. Application d'un dispositif suivant l'une quelconque des revendications 1 à 8, pour la fixation de roues de véhicule sur leur moyeu.

**Patentansprüche**

1. Vorrichtung zur Befestigung eines Teils an einem Träger, mit einem eigentlichen Befestigungsorgan (1) einschliesslich eines Kopfs (2), der durch einen Körper (4) verlängert ist, um den ein Ring (10) frei drehbar angeordnet ist, der zwei kegelstumpfförmige Anlageflächen (11, 17) mit unterschiedlichen Konizitäten und Oberflächen aufweist, von denen die innere erste (11) mit einer zugehörigen Anlagefläche (3) am Kopf (2) zusammenarbeitet, während die äussere zweite (17) mit einem zu befestigenden ersten Teil (30) in Berührung kommen soll, dadurch gekennzeichnet, dass der Ring (10) eine äussere dritte kugelförmige Anlagefläche (18) aufweist, die gegenüber der äusseren zweiten Anlagefläche (17) axial versetzt ist und mit einem weiteren zu befestigenden Teil (20) zusammenarbeitet, der gegenüber dem ersten Teil (30) unterschiedliche Eigenschaften aufweist.

2. Befestigungsvorrichtung nach Anspruch 1, dadurch gekennzeichnet, dass die dritte kugelförmige Anlagefläche (18) innerhalb des Kegels enthalten ist, der durch die kegelstumpfförmige äussere zweite Anlagefläche (17) gebildet ist.

3. Befestigungsvorrichtung nach Anspruch 1, dadurch gekennzeichnet, dass der Körper (4) des Befestigungsorgans (1) eine stufenförmige Aussenfläche hat.

4. Befestigungsvorrichtung nach Anspruch 3, dadurch gekennzeichnet, dass der Körper (4) des Befestigungsorgans (1) aussen zwei zylindrische Teile (5, 6) aufweist, die durch einen kegelstumpfförmigen Teil (7) miteinander verbunden sind.

5. Befestigungsvorrichtung nach einem der Ansprüche 3 und 4, dadurch gekennzeichnet, dass der Ring (10) innen stufenförmig ist.

6. Befestigungsvorrichtung nach Anspruch 5, dadurch gekennzeichnet, dass der Ring (10) innen zwei zylindrische Teile (12, 13) aufweist, die durch einen kegelstumpfförmigen Teil (14) miteinander verbunden sind.

7. Befestigungsvorrichtung nach einem der Ansprüche 3 bis 6, gekennzeichnet durch ein radiales Spiel zwischen den aneinandergrenzenden Flächen des Rings (10) und des Körpers (4) des Befestigungsorgans (1).

8. Befestigungsvorrichtung nach Anspruch 1, dadurch gekennzeichnet, dass der Körper (4) des Befestigungsorgans (1) an seinem freien Ende mit einer Schürze (8) endet die nach radialer Verformung nach aussen (bei 9) in einem Sitz (15) des Rings (10) aufgenommen ist und den axialen Halt des Rings (10) gegenüber dem Befestigungsorgan (1) gewährleistet.

9. Anwendung einer Vorrichtung nach einem der Ansprüche 1 bis 8 bei der Befestigung von Fahrzeugrädern an ihrer Nabe.

## Claims

1. A device for mounting an element to a support including affixing member (1) having a head (2) extended by a body (4) around which a ring (10) is freely rotatably mounted, the ring (10) having two bearing surfaces (11, 17) in the form of a truncated cone, of conical shape, and of surfaces which differ, of which the first, interior, surface cooperates with a conjugate bearing surface (3) extending to said head (2), while the second (17), exterior, surface is adapted to contact a first element (30) to be affixed, characterized in that the ring (10) includes a third, exterior, spherical, bearing surface (18) axially displaced with respect to the second exterior bearing surface (17) and adapted to cooperate with another element (20) to be affixed, having different characteristics from the first (30).

2. A mounting device according to claim 1, characterized in that the third spherical bearing surface (18) is contained at the interior of a cone formed by the second exterior conical bearing surface (17).

3. A mounting device according to claim 1, characterized in that the body (4) of the affixing member (1) has a stepped external surface.

4. A mounting device according to claim 3, characterized in that the body (4) of the affixing member (1) includes, externally, two cylindrical parts (5, 6) connected by a truncated part (7).

5. A mounting device according to either of the claims 3 and 4, characterized in that the ring (10) is internally stepped.

6. A mounting device according to claim 5, characterized in that said ring (10) includes, internally, two cylindrical parts (12, 13) connected by a truncated part (14).

7. A mounting device according to one of the claims 3 to 6, characterized in that there is provided a radial play between the adjacent surfaces of the ring (10) and the body (4) of the affixing member (1).

8. A mounting device according to claim 1, characterized in that the body (4) of the affixing member (1) is terminated at its free extremity by a skirt (8) which, after radial deformation towards the exterior, (at 9) is received in a recess (15) of ring (10) and assures the axial retention of the ring (10) with respect to the affixing member (1).

9. A mounting device according to anyone of the claims 1-8, for the mounting of vehicle wheels on their hubs.

FIG.1

FIG.2

FIG.3

FIG.4

FIG.5

0 032 643